# EUROPEAN PATENT SPECIFICATION

(11) **EP 3 574 299 B1**
(45) Date of publication and mention of the grant of the patent: **05.07.2023**
(21) Application number: 18700599.6
(22) Date of filing: 22.01.2018
(51) Int. Cl.: G01N 1/00, B01L 3/00, G01N 35/10

(54) **DEVICE AND METHOD FOR CONTINUOUS FLUID SAMPLING HAVING A VENT**
VORRICHTUNG UND VERFAHREN ZUR KONTINUIERLICHEN ENTNAHME DER FLÜSSIGEN PROBEN UNTER VERWENDUNG EINES ENTLÜFTERS
DISPOSITIF ET PROCÉDÉ POUR ÉCHANTILLONNAGE EN CONTINU DE FLUIDE AYANT UN PURGEUR D'AIR

(30) Priority: 26.01.2017 EP 17153215
(43) Date of publication of application: 04.12.2019
(73) Proprietor: Eidgenössische Anstalt für Wasserversorgung, Abwasserreinigung und Gewässerschutz, Eawag, 8600 Dübendorf ZH (CH)
(72) Inventor: HAMMES, Frederik, 8906 Bonstetten (CH); WEILENMANN, Hans-Ulrich, 8405 Winterthur (CH)
(74) Representative: Kasche & Partner
(86) International application number: PCT/EP2018/051379
(87) International publication number: WO 2018/138024

(56) References cited:
- EP-A2- 1 240 944
- WO-A1-2016/200922
- WO-A2-2011/071772

## Description

The present invention is directed to a continuous fluid sampling device (1), comprising a horizontally arranged fluid sample inlet (2), a vertically arranged longitudinal sampling chamber (5), an air vent (3) and an excess sample outlet (4), all of which are configured relative to each other to allow for the continuous processing, sampling and/or analyzing the fluid sample. The invention also relates to corresponding systems, methods and uses of said device.

Conventional flow cytometry has been adapted for water sample analysis (Hammes, F. and Egli, T. Anal Bioanal Chem (2010) 397: 1083), and analyses that do not require staining of the sample, e.g. addition of dyes, are available as automated devices (Dubelaar B. J., Gerritzen P., Beeker A. E. R., et al. Cytometry 1999;37:247-254). In the fields of fluid analysis, flow cytometry and microfluidic mixing systems, several devices are known in the art for loading and mixing samples with processing agents (EP 2 711 717 A2) such as dyes, for example, for use in systems for analyzing fluorescently tagged particles (US 2007/0269345 A1), for mixing water and sheath fluid in flow cytometry (US 2013/0343149 A1), for use in fluid-handling systems for analytical instruments (US 2002/0192113) or as microfluidic mixing apparatuses (US 2003/0040105).

A common problem encountered with the sampling, processing and/or analysis devices and corresponding methods today is the lack of suitability or the inefficacy for a continuous operation, i.e. the continuous flow of a fluid sample during sampling, processing and/or analysis. Continuous sampling, processing and analysis typically requires that the volume of the sample is small enough to provide for time-correlated data collection and that there should not be any disturbing air or other gases that interact with the sample physically or chemically during sampling and/or analysis.

US 2007/0269345 A1 and US 2003/0040105 A1 both teach systems for processing, mixing and analyzing biological samples but are silent on an efficient geometry of the system for time-correlated processing and analysis of small volumes of samples and on how to avoid air in the analysis.

US 2013/0343149 A1 discloses a system for mixing deionized water and sheath fluid while applying a fluid flow that is slow enough to avoid bubble formation in a pressurized container into which the fluid is transferred.

EP 1 240 944 A2 is directed to a device for analyzing liquid samples in a discreet, sample-by-sample manner, wherein the device is a disposable device for single use.

WO 2016/200922 A1 relates to methods and apparatuses for multi- analyte analyses, and discloses a controller configured to control fluid flow through the above fluidic units by controlling a pneumatic force applied to a fluidic chamber via a venting port or by controlling pumps an/or valves in fluid communication with microfluidic channels of the fluidic units, which allows the device to be suitable for sampling fluid samples in a continuous or semi-continuous manner.

In summary, the above devices or systems of the state of the art share the drawback that their use for continuous and time-correlated sample processing is limited and/or that the avoidance of air contamination during sample collection, processing and/or analysis is not addressed.

It is the objective of the present invention to provide an improved continuous fluid sampling device that is suitable for a continuous, preferably time-correlated sample analysis and for avoiding or removing air contamination during sample processing and/or analysis.

In a first aspect, the above objective is solved by the provision of a continuous fluid sampling device (1), comprising:
(i) a horizontally arranged sample inlet (2) in flow communication with
(ii) a vertically arranged longitudinal sampling chamber (5) with a top opening (6) that is configured for optional sample retrieval and air release in flow communication at its bottom end with
(iii) an air vent (3) that inclines laterally from the bottom of the sampling chamber (5) to about, above or below the level of the sample inlet (2), preferably to about or below the level of the sample inlet (2), and
(iv) an excess sample outlet (4) branching in flow communication from the air vent (3) with the exit of the excess sample outlet (4) positioned at a level above the bottom of the sampling chamber (5) and at or preferably below the level of the sample inlet (2),
wherein the device is configured so that the fluid sample
(a) enters the sampling chamber (5) via inlet (2) at a level above the bottom of the sampling chamber (5),
(b) is analyzed or sampled at a level at or below the inlet (2) in the sampling chamber (5) and optionally releases excess gas through the top opening (6) and/or the air vent (3), and
(c) exits the device via the excess sample outlet (4),
   and wherein air or a fluid optionally enters the air vent (3) to compensate for a change in volume inside the sampling chamber.

The continuous fluid sampling device (1) of the present invention is suitable for continuously loading, sampling and/or analyzing fluid samples entering the sampling chamber (5), e.g. pre-processed fluid samples.

The specific spatial configuration of the outlet (4) relative to the inlet (2) and the position of the air vent (3) and the open top (6) of the sampling chamber (5) allows for (i) a precise definition of the sample volume in the sampling chamber (5) at a given time point, (ii) the preferably continuous flow of the fluid sample, (iii) the continuously submerged position of a sampling means, e.g. a suction needle, for loading samples from the sampling chamber (5), and for (iv) the escape of air or other gases that could interfere with the analysis of the sample.

The term "fluid" as used in the present invention relates to any matter, medium, composition or substance that continually deforms or flows under an applied shear stress and includes liquids and gases, preferably liquids. Fluid samples for use according to the present invention include, e.g., aqueous samples such as water, cell solutions, bacterial solutions, bead solutions, beverages, and/or biofilm samples.

Pre-processed fluid samples for use in the fluid sampling device (1) of the present invention include, but are not limited to, fluid samples that were pre-treated with markers (e.g., dyes, fluorescent dyes), labels (e.g., antibodies, preferably fluorescently labeled antibodies, beads, quantum dots), chemicals (e.g., EDTA, buffers, bases / acids), and/or dilution media in order to prepare them for analytical detection.

In the context of the present invention, the term "vertically arranged longitudinal sampling chamber (5)" means that the sampling chamber (5) is arranged, i.e. oriented spatially in a manner that allows for air or other gas in the fluid sample, to rise from the bottom to either the top (6) of the sampling chamber (1) and/or to the air vent (3). Longitudinal means that the chamber is longer than wide in its dimensions. Preferably, the sampling chamber (5) is tube-shaped. The term "vertically arranged" in this context encompasses all vertical and sufficiently inclined configurations of the sampling chamber (5) that allow for the floating and exit of air or gas bubbles via the top opening (6) of sampling chamber (5).

The air or gas can be any gas that is present but not substantially dissolved in the fluid sample, e.g. ambient air, oxygen, nitrogen, helium, neon, argon, or carbon dioxide.

The term "horizontally arranged sample inlet (2)" as used herein means that sample inlet (2) is arranged, i.e. oriented spatially, to be substantially perpendicular to the vertically arranged longitudinal sample chamber (5), preferably at an angle of about 90 to 10 degrees relative to the sampling chamber (5), more preferably about 90 to 45 degrees, most preferably about 90 degrees.

The open top (6) or the air vent (3) of the device of the present invention can either be directly open to the environment or be configured, for example, as a lid, a valve, etc. that opens, preferably selectively opens whenever air/gas rises in the sampling chamber (5) to release the air/gas into the environment or to open whenever air/gas enters the sampling chamber (5) to compensate for a loss in volume inside the sampling chamber preferably through air vent (3). Valves for the open top (6) are preferably one way valves that only allow air/gas to leave the sampling device (1) but not to enter the sampling device (1) and/or be configured as pressure-sensitive valves that open in reaction to a given positive pressure within the sampling device (1) to release the pressure to the environment or to a given negative pressure within the sampling device (1) to compensate a loss of volume inside the sampling chamber via air vent (3).

The excess sample outlet (4) can also, for example, be configured freely open to the environment, as a lid or valve that opens or closes according to a user's needs. Such a lid or valve may be closed if the flow of the fluid sample is interrupted in order to avoid an undesired exit of the fluid sample from the sampling chamber (5). It may be desirable to pause the flow of sample fluid if, e.g., the sample is to be analyzed multiple times at a given point in time.

For example, a volume defined for the fluid samples by the geometry of the sampling chamber (5), preferably for flow cytometry analysis, can be in the range of 0.01 mL to 10.00 mL, preferably 0.01 mL to 1.00 mL, more preferably 0.03 mL to 0.08 mL. The fluid flow through the above chamber (1), e.g. for flow cytometry applications, is preferably in the range of 0.01 mL/min to 10.00 mL/min, preferably 0.01 mL/min to 1.00 mL/min, more preferably 0.01 mL/min to 0.08 mL/min. As an example, the samples can be brought to and from the device of the present invention in tubes with a diameter in the range of 0.1 mm to 10.0 mm, preferably 0.1 mm to 5.0 mm, more preferably 0.1 mm to 1.0 mm.

In preferred examples of the present invention, the spatial arrangement of excess sample outlet (4) and air vent (3) relative to sample inlet (2) is as follows. The inlet of the air vent (3) may be at, above or below the level of the sample inlet (2). The sample outlet (4) must be below or at most at the level of sample inlet (2). If the sample outlet (4) is at its maximum level, i.e. at the level of sample inlet (2), then the inlet of air vent (3) must necessarily be above sample inlet (2).

In a preferred embodiment, the air vent (3) of the sampling device (1) exits the sampling chamber (5) at about the level of the sample inlet (2). This arrangement allows for air to escape either through the top (5) of the sampling chamber or through the air vent (3), while the level of the air vent (3), the excess sample outlet (4), and the sample inlet (2) together define the maximum fluid level in the sampling chamber (1) during flow operation.

The air vent (3) further serves to compensate any loss in volume inside the sampling chamber (5) by allowing air, gas or a fluid to enter through air vent (3) into the sampling chamber (5). For example, if the flow of a fluid sample through sample inlet (2) equals the flow of the fluid sample through sample outlet (4), an additional transfer of sample fluid out of the sampling device (1) through, e.g. open top (6) creates a loss in volume inside the sampling chamber which loss can be compensated by the inflow of air, gas or a fluid through air vent (3).

The device of the present invention can also be implemented in a system, preferably an automated system, comprising the fluid sampling device (1) of the present invention.

Therefore, in a second aspect, the present invention is directed to a continuous fluid processing system comprising the fluid sampling device (1) as described above.

In the context of the present invention, the term "automated system" means that the components of the system, or the parameters in which the components are operable, are set automatically by means of routine and self-executed processes. An automated system preferably loads, optionally processes and analyzes the fluid sample (flow), preferably in a continuous process, preferably without the necessity for further human manipulations.

In a preferred embodiment, the system of the present invention comprises at least one further device selected from the group consisting of a mixing device (8), an incubation device (9), and an analytical device (7).

An incubation device (9) for use in the present invention is any device that positively influences the temperature of the fluid sample and/or the reaction of the fluid sample with a sample processing fluid, e.g. by increasing the reaction rate between the reactants, preferably by heat and/or by increasing the reaction time.

In another preferred embodiment, the mixing device of the present invention comprises a pump (10), preferably a peristaltic pump, and a mixing chamber (8), and the incubation device (9) is an incubation loop, preferably a heated incubation loop. Loops, e.g. looped tubing, are convenient means for increasing the reaction time in a flow system and have the advantage that loop tubing can homogenously heat the fluids inside. Also, it provides for plug-flow characteristics by avoiding the mixing of fluids with different incubation times.

The mixing chamber (8) according to the present invention can be any chamber that mixes the sample with one or more sample processing fluids to homogenize the fluids and to increase the reaction rate. Suitable mixing chambers can be physical mixers, e.g. blade or rotating parts mixers, ultrasonic mixers or any other suitable device for mixing fluids.

The pump (10) of the mixing device can be any pump that is suitable for continuously promoting the flow of fluids, e.g. a peristaltic pump.

Also, the system of the present invention can comprise a steering unit for regulating the pump (10), temperature, the mixing chamber (8) and other system parameters necessary for system operation; a software for controlling the steering unit and preferably for communicating with further components of the system, e.g. with an analytical device (7), preferably a flow cytometer, and for analysis of the data.

In a further preferred embodiment, the analytical device (7) of the present invention is selected from the group consisting of cell counters, photo spectrometers, microscopes, mass spectrometers, and flow cytometry devices, preferably a flow cytometry device, more preferably a flow cytometry device for stained fluid samples.

The sampling device (1) of the present invention is configured and suitably built to allow for either direct sample analysis while the fluid sample is still inside the sampling chamber (5), preferably by spectroscopic or microscopic analytical devices where the sampling device functions as sample cuvette, or after transferring the fluid sample from the sampling chamber (5) to an outside positioned analytical device, as will be described further below. Also, the above sampling device (1) can comprise means to suitably install the device in another physical entity of a system according to the invention.

The term "continuous fluid sampling device" as used herein is meant to indicate that the device is suitable and preferably used for sampling fluid samples in a continuous or semi-continuous manner (with regular interrupts), meaning that one fluid sample is sampled and/or analyzed after another, thus resulting in a string or row of at least two consecutively sampled and/or analyzed fluid samples. For example, the devices of the present invention can be used to sequentially sample, analyze or monitor fluid samples from rivers, sewage pipes, sewage treatment plants, fluid processing machines, and animal or plant fluids, thereby continually recording gradual or abrupt changes in the fluid sample components and/or properties over time. Of course, the device and all or part of its operating parameters including loading, transfer and timing can be operated automatically, e.g. controlled by a computer. On the other hand, the device of the present invention may also be operated manually or in a batch mode, i.e. non-continually.

In a third aspect, the present invention is directed to a method processing, sampling and/or analyzing fluid samples, comprising the following steps:
(a) providing the continuous fluid sampling device (1), or the continuous fluid processing system as described above,
(b) loading a fluid sample via inlet (2) into sampling chamber (5) of device (1),
(c) analyzing or sampling the fluid sample at a level at or below inlet (2) in sampling chamber (5) and optionally releasing gas through top opening (6) and/or air vent (3), and
(d) removing excess fluid sample via movement through sample outlet (4).

In a preferred embodiment, the above method is a method for continuously processing, sampling and/or analyzing fluid samples. The steps (a) to (d) in the above method are preferably executed in a sequential order, and more preferably, they are repeated for multiple fluid samples. Preferably, the method is practiced continuously for at least two or more fluid samples, in order to provide for a continuous flow, sampling and/or analysis of fluid samples through the device and/or system. Also, the fluid sample flow can be interrupted as described above to analyze a sample multiple times at a given point in time, i.e. step (c) can be repeated as often as necessary and desired.

The fluid sample(s) for loading into the fluid sampling device (1) of the invention can be pre-processed fluid sample(s).

In a preferred embodiment of the above method, the fluid sample of step (b) and a sample processing fluid are both
(aa) retrieved from a respective source,
(bb) guided into mixing chamber (8),
(cc) guided through an incubation loop (9), preferably a heated incubation loop, and
(dd) guided via inlet (2) into sampling chamber (5).

Preferably, the continuous flow of fluid samples exits the sampling chamber (5) via the sample outlet (4), which can be configured, e.g. as a lid or valve as described above, and can be received in a waste container, e.g. via tubing.

In a further preferred embodiment, the fluid sample in sampling chamber (5) is physically, chemically and/or biologically analyzed in step (c) of the above method. Analysis in step (c) is preferably performed using an analytical device as described above.

Also the other components of the system described above can be used in the appropriate steps of the method of the present invention.

In a further preferred embodiment of the above method, the sample is analyzed in the sampling chamber (5) in step (c), preferably without removal of the sample from the sampling chamber (5), preferably by spectrometric or microscopic analysis, more preferably by photo spectrometry.

In a further preferred embodiment of the above method, the sample is removed from the sampling chamber (5) for analysis in step (c), preferably via the top opening (6) of the sampling chamber (5), preferably by a needle and suction. Of course, the sample can also be removed via the air vent (3).

In a further preferred embodiment, the analysis in step (c) of the above method is selected from the group of analysis methods consisting of photo spectrometry, mass spectrometry, microscopy, and cell counting, preferably flow cytometry, more preferably flow cytometry for stained fluid samples.

In a fourth aspect, the present invention is directed to a use of the above continuous fluid sampling device (1) in the method of the present invention, preferably for continuously processing, sampling and/or analyzing fluid samples.

In the following, the device and methods of the present invention are illustrated by a representative embodiment of the invention which is not to be construed as limiting the invention beyond the scope of the appended claims.

### Reference Signs in the drawings:

| | | | |
|---|---|---|---|
| (1) | Continuous fluid sampling device | (8) | Mixing chamber |
| (2) | Sample inlet | (9) | Incubation device/loop |
| (3) | Air vent | (10) | Pump |
| (4) | Excess sample outlet | (11) | Waste container |
| (5) | Sampling chamber | (12) | Sample source |
| (6) | Sampling chamber top opening | (13) | Processing fluid source |
| (7) | Analytical or processing device | | |

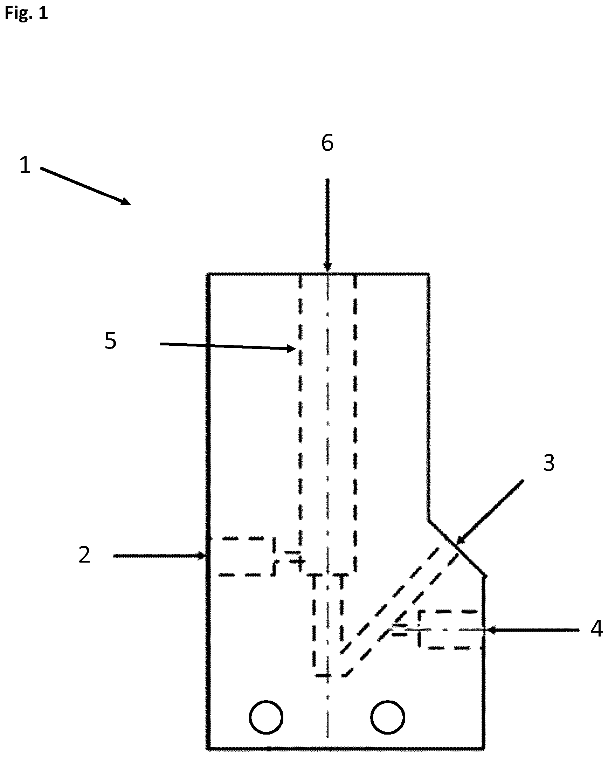

**Fig. 1** depicts a preferred embodiment of a continuous fluid sampling device (1) of the present invention. The fluid sampling device (1) comprises a horizontally arranged sample inlet (2) that is in flow communication with a vertically arranged longitudinal sampling chamber (5). The dashed lines represent the cavities within the continuous fluid sampling device (1) and the dash-dotted line represents the vertical axis of fluid sampling device (1) along which, e.g. a suction needle of an analytical device can be inserted into sampling chamber (5). Top opening (6) is configured for optional sample retrieval, e.g. by a suction needle of a flow cytometer, and air release. Top opening (6) is in flow communication at its bottom end with air vent (3) that inclines laterally from the bottom of sampling chamber (5) to about or less than the level of sample inlet (2). The level of the sample fluid is determined by the relative spatial orientation of the sample inlet (2) and the air vent (3). Excess sample outlet (4) branches in flow communication from air vent (3) with the exit of excess sample outlet (4) positioned at a level above the bottom of sampling chamber (1) and below the level of sample inlet (2). The sample outlet (4) may also be configured as a lid or valve to stop a fluid flow, e.g. when interrupting fluid flow. In this preferred embodiment, the fluid sample enters sampling chamber (5) via inlet (2) at a level above the bottom of sampling chamber (1). Subsequently the fluid sample can be analyzed or sampled at a level at or below sample inlet (2) in sampling chamber (5) and, optionally, excess gas can be released through top opening (6) and/or air vent (3). Also or alternatively, if the flow of a fluid sample through sample inlet (2) equals the flow of the fluid sample though sample outlet (4), an additional transfer of sample fluid out of the sampling device (1) through, e.g. open top (6) creates a loss in volume inside the sampling chamber (5) which loss can be compensated by the inflow of air, gas or a fluid through air vent (3). Finally, the fluid sample exits the device via excess sample outlet (4).

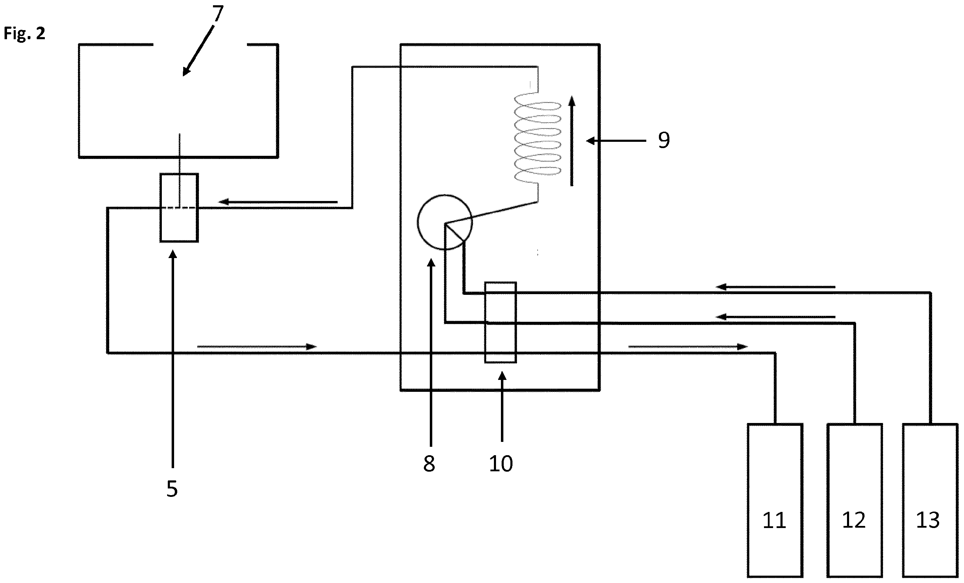

**Fig. 2** depicts a preferred embodiment of a continuous fluid processing system of the present invention. A fluid sample can be retrieved from source (12), e.g. a container, and be pumped by a pump (10), preferably a peristaltic pump, together with a sample processing fluid, e.g. a dye, from source (13) into mixing chamber (8). After mixing of the fluids, the pre-processed fluid samples are transferred through incubation loop (9), which can be heated, into sampling chamber (5). Either in sampling chamber (5) or after removing the sample from the chamber, e.g. by a suction needle, analysis or processing device (7) analyzes or further processes the sample. Finally the fluids exit the system into waste container (11).

### Example 1

In the following, an exemplary method for continuously processed fluid samples in an exemplary, non-limiting and preferred system according to the present invention is provided for illustrating purposes only. A complete setup for a fully automated, continuous online (i.e. *in-situ*) flow cytometry experiment included (i) a flow cytometer (7) (Accuri C6, BD, USA; CytoFLEX, Beckman-Coulter, USA; NovoCyte, ACEA Biosciences, USA) including respective software, (ii) an automated sampling, mixing, and temperature controlled incubation unit (8, 9) connected (a) both physically to the sample acquisition needle and via software to the flow cytometer (7), (b) to the sample to be measured (12), and (c) to the relevant substances / chemicals (13) used for sample treatment, and (iii) an optional software suite for batch and / or real-time data analysis. The automation unit comprised (i) a peristaltic pump (10) that operated 3 lines in parallel, (ii) a temperature controlled incubation chamber (9), (iii) a continuous mixing chamber (8), (iv) a thin tube incubation loop, and (v) a fluid sampling device (1) of the present invention into which the flow cytometer needle reached. The peristaltic pump (10) was connected via thin tubes to (a) the sample to be measured, (b) one or multiple containers (13) containing relevant substances / chemicals, e.g. dyes, used for sample treatment/processing, (c) the mixing chamber (8) followed by the incubation loop (9) and the sampling chamber (5), wherein the flow cytometer needle was introduced, and (d) a waste container (11).

The operating sequence consisted of the following steps: (i) the sample, e.g. drinking water, was continuously retrieved through a respective thin tube via the peristaltic pump (10) from container (12) and directed towards the mixing chamber (8) at about 20 µl min⁻¹. (ii) Staining solution (preferably SYBR Green, Life Technologies, USA) was continuously drawn from the respective container (13) through the respective thin tube via the peristaltic pump (10) and directed towards the mixing chamber (8) at about 20 µl min⁻¹. (iii) The two liquids were continuously mixed through stirring and directed into the incubation loop (9) through which the mixture flowed and was thus incubated at the appropriate temperature of about 37 °C for about 10 min. (iv) The mixture then moved through a thin tube (2) into the fluid sampling device (1) of the present invention, where the flow cytometer needle was inserted and where the specific arrangement of drillings ensured that (a) air bubbles can escape, (b) the flow cytometer needle was always submerged, and (c) excess volumes of the mixture were continuously removed by the peristaltic pump (10) and deposited into the waste container (11). (v) The flow cytometer (7) was set to continuous measurement at about 15 µl min⁻¹.

## Claims

1. A continuous fluid sampling device (1), comprising:
(i) a horizontally arranged sample inlet (2) in flow communication with
(ii) a vertically arranged longitudinal sampling chamber (5) with a top opening (6) that is configured for optional sample retrieval and air release in flow communication at its bottom end with
(iii) an air vent (3) that inclines laterally from the bottom of the sampling chamber (5) to about, above or below the level of the sample inlet (2), preferably to about or below the level of the sample inlet (2), and
(iv) an excess sample outlet (4) branching in flow communication from the air vent (3) with the exit of the excess sample outlet (4) positioned at a level above the bottom of the sampling chamber (5) and at or preferably below the level of the sample inlet (2),
wherein the device is configured so that the fluid sample
(a) enters the sampling chamber (5) via inlet (2) at a level above the bottom of the sampling chamber (5),
(b) is analyzed or sampled at a level at or below the inlet (2) in the sampling chamber (5) and optionally releases excess gas through the top opening (6) and/or the air vent (3), and
(c) exits the device via the excess sample outlet (4).

2. The continuous fluid sampling device (1) according to claim 1, wherein the air vent (3) exits the sampling chamber (1) at about the level of the sample inlet (2).

3. A continuous fluid processing system comprising the continuous fluid sampling device (1) according to claim 1 or 2.

4. The continuous fluid processing system according to claim 3, comprising at least one further device selected from the group consisting of a mixing device, an incubation device (9), and an analytical device (7).

5. The continuous fluid processing system according to claim 4, wherein the mixing device comprises a pump (10), preferably a peristaltic pump, and a mixing chamber (8), and wherein the incubation device (9) is an incubation loop, preferably a heated incubation loop.

6. The continuous fluid processing system according to claim 4 or 5, wherein the analytical device (7) is selected from the group consisting of cell counters, photo spectrometers, microscopes, mass spectrometers, and flow cytometry devices, preferably a flow cytometry device, more preferably a flow cytometry device for stained fluid samples.

7. A method for processing, sampling and/or analyzing fluid samples, comprising the following steps:
(a) providing the continuous fluid sampling device (1) according to claim 1 or 2, or the continuous fluid processing system according to any of claims 3 to 6,
(b) loading a fluid sample via inlet (2) into sampling chamber (5) of device (1),
(c) analyzing or sampling the fluid sample at a level at or below the inlet (2) in the sampling chamber (5) and optionally releasing gas through top opening (6) and/or air vent (3), and
(d) removing excess fluid sample via movement through sample outlet (4).

8. The method according to claim 7, wherein the fluid sample of step (b) and a sample processing fluid are both
(aa) retrieved from a respective source,
(bb) guided into a mixing chamber (8),
(cc) guided through an incubation loop (9), preferably a heated incubation loop, and
(dd) guided via inlet (2) into the sampling chamber (5).

9. The method according to claim 7 or 8, wherein the fluid sample is physically, chemically and/or biologically analyzed in step (c).

10. The method according to any of claims 7 to 9, wherein the fluid sample is analyzed in the sampling chamber (5) in step (c), preferably without removal of the sample from the chamber (5), preferably by spectrometric or microscopic analysis, more preferably by photo spectrometry.

11. The method according to any of claims 7 to 10, wherein the sample is removed from the sampling chamber (5) for analysis in step (c), preferably via the top opening (6) of the sampling chamber (5), preferably by a needle and suction.

12. The method according to any of claims 7 to 11, wherein the analysis in step (c) is selected from the group of analysis methods consisting of photo spectrometry, mass spectrometry, microscopy, and cell counting, preferably flow cytometry, more preferably flow cytometry for stained fluid samples.

13. The method according to any of claims 7 to 12 for continuously processing, sampling and/or analyzing fluid samples.

14. A use of the continuous fluid sampling device according to claim 1 or 2, or the continuous fluid processing system according to any of claims 3 to 6 for continuously processing, sampling and/or analyzing fluid samples.

## Patentansprüche

1. Eine Vorrichtung zur kontinuierlichen Entnahme von flüssigen Proben (1), umfassend:
(i) einen horizontal angeordneten Probeneinlass (2) in Fliessverbindung mit
(ii) einer in Längsrichtung vertikal angeordneten Probenkammer (5) mit einer oberen Öffnung (6), die zur optionalen Probenentnahme ausgelegt ist, und einer Luftfreisetzungsöffnung in Fliessverbindung an ihrem unteren Ende mit
(iii) einer Belüftung (3), die lateral vom Boden der Probenkammer (5) bis ungefähr, oberhalb oder unterhalb der Ebene des Probeneinlasses (2) ansteigt, vorzugsweise bis ungefähr oder unterhalb der Ebene des Probeneinlasses (2) ansteigt, und
(iv) einen Auslass für überschüssige Probe (4), der in Fliessverbindung von der Belüftung (3) abzweigt, wobei der Ausgang des Auslasses für überschüssige Proben (4) auf einer Ebene oberhalb des Bodens der Probenkammer (5) positioniert ist, und an oder vorzugsweise unterhalb der Ebene des Probeneinlasses (2) positioniert ist,
wobei die Vorrichtung so ausgelegt ist, dass die flüssige Probe
(a) in die Probenkammer (5) über den Einlass (2) auf einer Ebene oberhalb des Bodens der Probenkammer (5) eintritt,
(b) auf der Ebene am oder unterhalb des Einlasses (2) in der Probenkammer (5) analysiert oder entnommen wird, und optional überschüssiges Gas durch die obere Öffnung (6) und/oder die Belüftung (3) freigesetzt wird, und
(c) die Vorrichtung über den Auslass für überschüssige Probe (4) verlässt.

2. Die Vorrichtung zur kontinuierlichen Entnahme von flüssigen Proben (1) gemäss Anspruch 1, wobei die Belüftung (3) die Probenkammer (1) auf etwa der Ebene des Probeneinlasses (2) verlässt.

3. Ein System zur kontinuierlichen Verarbeitung von Flüssigkeiten, das die Vorrichtung zur kontinuierlichen Entnahme von flüssigen Proben (1) gemäss Anspruch 1 oder 2 umfasst.

4. Das System zur kontinuierlichen Verarbeitung von Flüssigkeiten gemäss Anspruch 3, das wenigstens eine weitere Vorrichtung umfasst, die aus der Gruppe ausgewählt ist, die aus einer Mischvorrichtung, einer Inkubationsvorrichtung (9) und einer analytischen Vorrichtung (7) besteht.

5. Das System zur kontinuierlichen Verarbeitung von Flüssigkeiten gemäss Anspruch 4, wobei die Mischvorrichtung eine Pumpe (10), vorzugsweise eine peristaltische Pumpe, und eine Mischkammer (8) umfasst, und wobei die Inkubationsvorrichtung (9) eine Inkubationsschleife, vorzugsweise eine beheizte Inkubationsschleife ist.

6. Das System zur kontinuierlichen Verarbeitung von Flüssigkeiten gemäss Anspruch 4 oder 5, wobei die analytische Vorrichtung (7) aus der Gruppe ausgewählt ist, die aus Zellzählern, Photospektrometern, Mikroskopen, Massenspektrometern und Vorrichtungen zur Durchflusszytometrie besteht, vorzugsweise eine Vorrichtung zur Durchflusszytometrie, mehr bevorzugt eine Vorrichtung zur Durchflusszytometrie für gefärbte flüssige Proben ist.

7. Ein Verfahren zur Verarbeitung, Probennahme und/oder Analyse von flüssigen Proben, dass die folgende Schritte umfasst:
(a) das Bereitstellen der Vorrichtung zur kontinuierlichen Entnahme von flüssigen Proben (1) gemäss Anspruch 1 oder 2, oder des Systems zur kontinuierlichen Verarbeitung von Flüssigkeiten gemäss einem der Ansprüche 3 bis 6,
(b) das Beladen mit einer flüssigen Probe über den Einlass (2) in die Probenkammer (5) der Vorrichtung (1),
(c) das Analysieren oder die Probennahme der flüssigen Probe auf einer Ebene an oder unterhalb des Einlasses (2) in der Probenkammer (5), und optional die Freisetzung von Gas durch die obere Öffnung (6) und/oder den Luftauslass (3), und
(d) das Entfernen überschüssiger Probenflüssigkeit mittels Bewegung durch den Probenausgang (4).

8. Das Verfahren gemäss Anspruch 7, wobei die flüssige Probe von Schritt (b) und eine Flüssigkeit zur Probenverarbeitung beide
(aa) einer jeweiligen Quelle entnommen werden,
(bb) in eine Mischkammer (8) geführt werden,
(cc) durch eine Inkubationsschleife (9), vorzugsweise eine geheizte Inkubationsschleife geführt werden, und
(dd) über den Einlass (2) in die Probenkammer (5) geführt werden.

9. Das Verfahren gemäss einem der Ansprüche 7 oder 8, wobei die flüssige Probe in Schritt (c) physikalisch, chemisch und/oder biologisch analysiert wird.

10. Das Verfahren gemäss einem der Ansprüche 7 bis 9, wobei die flüssige Probe in der Probenkammer (5) in Schritt (c), vorzugsweise ohne Entfernen der Probe aus der Kammer (5) analysiert wird, vorzugsweise durch spektrometrische oder mikroskopische Analyse, mehr bevorzugt durch Photospektrometrie.

11. Das Verfahren gemäss einem der Ansprüche 7 bis 10, wobei die Probe für die Analyse in Schritt (c) aus der Probenkammer (5) entfernt wird, vorzugsweise über die obere Öffnung (6) der Probenkammer (5), vorzugsweise mittels einer Nadel und Absaugen.

12. Das Verfahren gemäss einem der Ansprüche 7 bis 11, wobei die Analyse in Schritt (c) aus der Gruppe der Analyseverfahren ausgewählt ist, die aus Photospektrometrie, Massenspektrometrie, Mikroskopie und Zellzählen besteht, vorzugsweise Durchflusszytometrie, mehr bevorzugt Durchflusszytometrie für gefärbte flüssige Proben ist.

13. Das Verfahren gemäss einem der Ansprüche 7 bis 12 zur kontinuierlichen Verarbeitung, Probennahme und/oder Analyse von flüssigen Proben.

14. Eine Verwendung der Vorrichtung zur kontinuierlichen Entnahme von flüssigen Proben gemäss Anspruch 1 oder 2 oder des Systems zur kontinuierlichen Verarbeitung von Flüssigkeiten gemäss einem der Ansprüche 3 bis 6 zur kontinuierlichen Verarbeitung, Probennahme und/oder Analyse von flüssigen Proben.

## Revendications

1. Dispositif d'échantillonnage de fluide en continu (1), comprenant :
(i) une entrée d'échantillon agencée horizontalement (2) en communication d'écoulement avec
(ii) une chambre d'échantillonnage longitudinale agencée verticalement (5) avec une ouverture de sommet (6) qui est configurée pour l'extraction d'échantillon et la libération d'air optionnelles en communication d'écoulement au niveau de son extrémité de fond avec
(iii) un évent d'aération (3) qui est incliné latéralement depuis le fond de la chambre d'échantillonnage (5) jusqu' à environ le niveau de l'entrée d'échantillon (2), au-dessus ou au-dessous de ce même niveau, de préférence jusqu'à environ le niveau de l'entrée d'échantillon (2) ou au-dessous de ce même niveau, et
(iv) une sortie d'échantillon en excès (4) branchée en communication d'écoulement depuis l'évent d'aération (3) avec le passage de sortie de la sortie d'échantillon en excès (4) positionnée à un niveau au-dessus du fond de la chambre d'échantillonnage (5) et au niveau ou de préférence au-dessous du niveau de l'entrée d'échantillon (2),
dans lequel le dispositif est configuré de telle sorte que l'échantillon de fluide
(a) entre dans la chambre d'échantillonnage (5) via l'entrée (2) à un niveau au-dessus du fond de la chambre d'échantillonnage (5),
(b) soit analysé ou échantillonné à un niveau au niveau ou au-dessous de l'entrée (2) dans la chambre d'échantillonnage (5) et facultativement, libère le gaz en excès au travers de l'ouverture de sommet (6) et/ou de l'évent d'aération (3), et
(c) sorte du dispositif via la sortie d'échantillon en excès (4).

2. Dispositif d'échantillonnage de fluide en continu (1) selon la revendication 1, dans lequel l'évent d'aération (3) sort de la chambre d'échantillonnage (1) environ au niveau de l'entrée d'échantillon (2).

3. Système de traitement de fluide en continu comprenant le dispositif d'échantillonnage de fluide en continu (1) selon la revendication 1 ou 2.

4. Système de traitement de fluide en continu selon la revendication 3, comprenant au moins un dispositif supplémentaire sélectionné parmi le groupe constitué par un dispositif de mélange, un dispositif d'incubation (9) et un dispositif analytique (7).

5. Système de traitement de fluide en continu selon la revendication 4, dans lequel le dispositif de mélange comprend une pompe (10), de préférence une pompe péristaltique, et une chambre de mélange (8), et dans lequel le dispositif d'incubation (9) est une boucle d'incubation, de préférence une boucle d'incubation chauffée.

6. Système de traitement de fluide en continu selon la revendication 4 ou 5, dans lequel le dispositif analytique (7) est sélectionné parmi le groupe constitué par les compteurs de cellules, les photospectromètres, les microscopes, les spectromètres de masse et les dispositifs de cytométrie en flux, de préférence un dispositif de cytométrie en flux, plus préférablement un dispositif de cytométrie en flux pour échantillons de fluide teintés.

7. Procédé pour traiter, échantillonner et/ou analyser des échantillons de fluide, comprenant les étapes suivantes :
(a) fourniture du dispositif d'échantillonnage de fluide en continu (1) selon la revendication 1 ou 2, ou du système de traitement de fluide en continu selon l'une quelconque des revendications 3 à 6,
(b) chargement d'un échantillon de fluide via l'entrée (2) à l'intérieur de la chambre d'échantillonnage (5) du dispositif (1),
(c) analyse ou échantillonnage de l'échantillon de fluide à un niveau au niveau ou au-dessous de l'entrée (2) dans la chambre d'échantillonnage (5) et facultativement, libération de gaz au travers de l'ouverture de sommet (6) et/ou de l'évent d'aération (3), et
(d) retrait de l'échantillon de fluide en excès via son déplacement au travers de la sortie d'échantillon (4).

8. Procédé selon la revendication 7, dans lequel l'échantillon de fluide de l'étape (b) et un fluide de traitement d'échantillon sont tous deux
(aa) extraits à partir d'une source respective,
(bb) guidés à l'intérieur d'une chambre de mélange (8),
(cc) guidés suivant une boucle d'incubation (9), de préférence une boucle d'incubation chauffée, et
(dd) guidés via l'entrée (2) à l'intérieur de la chambre d'échantillonnage (5).

9. Procédé selon la revendication 7 ou 8, dans lequel l'échantillon de fluide est analysé physiquement, chimiquement et/ou biologiquement à l'étape (c).

10. Procédé selon l'une quelconque des revendications 7 à 9, dans lequel l'échantillon de fluide est analysé dans la chambre d'échantillonnage (5) à l'étape (c), de préférence sans retirer l'échantillon de la chambre (5), de préférence par analyse spectrométrique ou microscopique, plus préférablement par photospectrométrie.

11. Procédé selon l'une quelconque des revendications 7 à 10, dans lequel l'échantillon est retiré de la chambre d'échantillonnage (5) pour analyse à l'étape (c), de préférence via l'ouverture de sommet (6) de la chambre d'échantillonnage (5), de préférence au moyen d'une aiguille et par aspiration.

12. Procédé selon l'une quelconque des revendications 7 à 11, dans lequel l'analyse de l'étape (c) est sélectionnée parmi le groupe de procédés d'analyse constitué par la photospectrométrie, la spectrométrie de masse, la microscopie et le comptage de cellules, de préférence la cytométrie en flux, plus préférablement la cytométrie en flux pour échantillons de fluide teintés.

13. Procédé selon l'une quelconque des revendications 7 à 12 pour traiter, échantillonner et/ou analyser en continu des échantillons de fluide.

14. Utilisation du dispositif d'échantillonnage de fluide en continu selon la revendication 1 ou 2, ou du système de traitement de fluide en continu selon l'une quelconque des revendications 3 à 6 pour traiter, échantillonner et/ou analyser en continu des échantillons de fluide.
